# EUROPEAN PATENT SPECIFICATION

(11) **EP 1 986 388 B1**
(45) Date of publication and mention of the grant of the patent: **20.07.2011**
(21) Application number: 07109183.9
(22) Date of filing: 30.05.2007
(51) Int. Cl.: H04L 29/06, H04L 29/08

(54) **Dispatching method for allocating a server, a system, a server, and a computer software product**
Abfertigungsverfahren zur Zuordnung eines Servers sowie System, Server und Computersoftware
Procédé d'ordonnancement attribuant un serveur, un système, un serveur, et un produit de logiciel informatique

(30) Priority: 27.04.2007 EP 07301003
(43) Date of publication of application: 29.10.2008
(73) Proprietor: Alcatel Lucent, 75008 Paris (FR)
(72) Inventor: Tabery, Peter, 80992, München (DE)
(74) Representative: Brose, Gerhard

(56) References cited:
- US-A1- 2003 023 877
- SINGH ET AL: "Failover, load sharing and server architecture in SIP telephony" COMPUTER COMMUNICATIONS, ELSEVIER SCIENCE PUBLISHERS BV, AMSTERDAM, NL, vol. 30, no. 5, 20 February 2007 (2007-02-20), pages 927-942, XP005895774 ISSN: 0140-3664

## Description

This application concerns a dispatching method for allocating a server, a system comprising such a server, the server and a corresponding computer software product.

Session Initiation Protocol (SIP) proxies play the role of routing engines and delivery platforms for telecommunication services. Many types of services require these proxies to retain call state. That is, these proxies know how to correlate SIP messages in order to reconstruct the state of calls that exist in the user agents. Unfortunately, maintaining call state presents problems. First, it introduces scalability problems when there are many user agents being served by a single proxy. Second, it makes failover and load balancing more complex, since once state is established in one proxy, subsequent signalling must return to the same proxy in order for proper service execution.

To achieve scalability when handling signalling messages from a large number of calls, SIP proxies must minimize the per-call information that is necessary to be maintained. One method of achieving this is to transfer the state associated with a call to entities where the state is relevant. In addition, the proxy should be able to retrieve and update the call state information if the characteristics of the active call are changed.

Several proposed SIP extensions allow proxies to encapsulate any state information they desire into a header, called state header, that is delivered to the user agents for a call. This information is reflected back in subsequent messages. A method of hiding the call state in a message header effectively allows proxies to store call states in user agents, behaving as SIP stateful proxies while the communication protocol and the proxies remain stateless.

Such communicated distributed states have several disadvantages. Besides an agreed semantics that is necessary to interpret a header information, side effects caused by e.g. latency or misinterpretation of state information are troublesome.

To be able to cope with fast re-allocation requirements, a stateless dispatcher providing certain redundancy is needed, usually provided by a redundant set of proxies that are allocated by a dispatcher.

Such a dispatcher is disclosed in the International Patent Application W09854887. This application discloses a method for an enhanced services system with load sharing and redundancy. The system comprises a switching platform and a plurality of caller's and called parties' telephones that are connected to the switching platform. A primary application server containing caller primary instance and call standby instance. A standby application server containing call standby instances, wherein both servers process and/or monitor calls placed within the system. A database storing and maintaining call specific information is being connected to both primary and standby application servers, thus explicitly maintaining a kind of consistency. Call tracking links are established between the primary and standby application servers and the switching platform to support the application server redundancy scheme. Links are established to transmit messages between the primary and standby application servers.

This causes tremendous load for synchronization and replication. Hence the solution does not scale well, especially for systems designed for surviving multiple link failures (n out of m entities may fail, n> 1).

In US 2003/0023877 A1 a system and method of managing data transmission loads is described. A dedicated load manager executes a hash function to direct incoming, data traffic and to allocate system resources. Load and residual processing capacities of the system resources are kept in a table at the load manager.

"Failover, load sharing and server architecture in SIP telephony", Kundan Singh, Henning Schulzrinne, Computer Communications 30 (2007), 927-942, identifier-based load shoring for SIP telephony and the use of redundant servers using the same IP address in SIP telephony networks is described.

There are several distinct tasks associated with managing a set of redundant proxies: Dispatching a datagram to a primary and a secondary proxy using a stateless parallelizable mechanism for spreading the load evenly across all proxies, ensuring a single reply to the particular datagram, detecting failure of either proxy and reacting accordingly, and quickly restoring regular operation once the defective entity has been repaired.

Here, the term datagram is generally used for packet based communication where the packets are not transmitted reliably as in the User Datagram Protocol (UDP). Reliable delivery is independent of whether or not the network can detect transmission errors in packets: in a datagram network, damaged packets could be discarded without notifying the sender or receiver. UDP does not provide the reliability and ordering guarantees that the Transfer Control Protocol (TCP) does. A datagram may arrive out of order or go missing without notice. Without the overhead of establishing a connection first and then checking if every packet actually arrived, UDP is faster and more efficient for many lightweight or time-sensitive purposes. Also, its stateless nature is useful for servers that answer small queries from huge numbers of clients. Compared to TCP, UDP is required for broadcast and multicast. This is the actual meaning of datagram, a communication means for information exchange from one to possibly many parties.

Especially the dispatching mechanism is required to scale, i.e. to have the property that every entity added to the system increases the overall performance.

The above stated set of constraints, in the following called problem, is fulfilled by a dispatching method for allocating a server out of a set of proxies or servers by determining dependent from the message whether the server becomes an allocated server, that is a responsible server. I.e. one server uniquely identify itself as the responsible allocated server.

A server is understood as an application program that accepts connections in order to service requests by sending back responses. It is also understood as a server host, i.e. the underlying machine running the application program. A proxy is understood as a system or an application program which services the requests of its clients by making requests of other servers.

The problem is solved by a telecommunication system comprising distribution means (BM) for distributing messages and servers or proxies for processing messages, where the telecommunication system comprises dispatching means for allocating a message to a server or a proxy, where the server or the proxy comprising the dispatching means and the dispatching means are adapted to determine dependent from the message whether this server or proxy becomes an allocated server or proxy.

And the problem is solved inter alia by a dispatching method for allocating a serving entity out of a set of proxies or servers (P1 ... Pn) of a telecommunication system, where the serving entity determines itself as allocated dependent from a broadcasted message by means of an hashing function.

Especially a server or a proxy of a telecommunication system, comprising dispatching means for allocating a message to the server, where the dispatching means are adapted to determining dependent from the message whether the server becomes an allocated server, solves the problem.

And the invention is advantageously realized as a computer software product comprising program means for performing the above method.

Abstractly the problem could be regarded as to provide a scalable dispatching mechanism for enhanced fault tolerance.

Advantageously randomized allocation is used to spread the load statistically and avoid systematic concentration leading to worst case scenarios. This becomes applicable because of the distribution of the dispatching means.

The method is especially suited to operate an array of redundant call state proxies, where every connection is served by a primary proxy and a context, so called states, is additionally stored at a secondary proxy for insuring uninterrupted operation in case the primary proxy fails. For simplicity primary and secondary proxies could assign themselves statistically using a stateless distribution mechanism by means of modulo arithmetic or hashing functions. Such a simple yet efficient dispatching algorithm yields to a decentralized selection of secondary (standby) servers with graceful fail-over in case of server outages, even in case of multiple subsequent failures.

The advantage of the invention is a simple and efficient dispatching algorithm yielding a decentralized selection of secondary (standby) servers with graceful fail-over in case of server outages, even in case of multiple subsequent failures. Although the invention is only illustrated for a SIP proxy, the principle has a wide application in any kind of distributed fail-over scenario.

These and other objects and advantages are provided by a dispatching method, system, server, proxy and computer software product according to the appended claims.

The invention is described in detail using
Fig. 1 showing a dispatching arrangement according to prior art
Fig. 2 showing a system according to the invention
Fig. 3 showing a simplified Specification and Description Language (SDL) flow diagram of an exemplary proxy's packet assignment algorithm according to the method according to the invention.

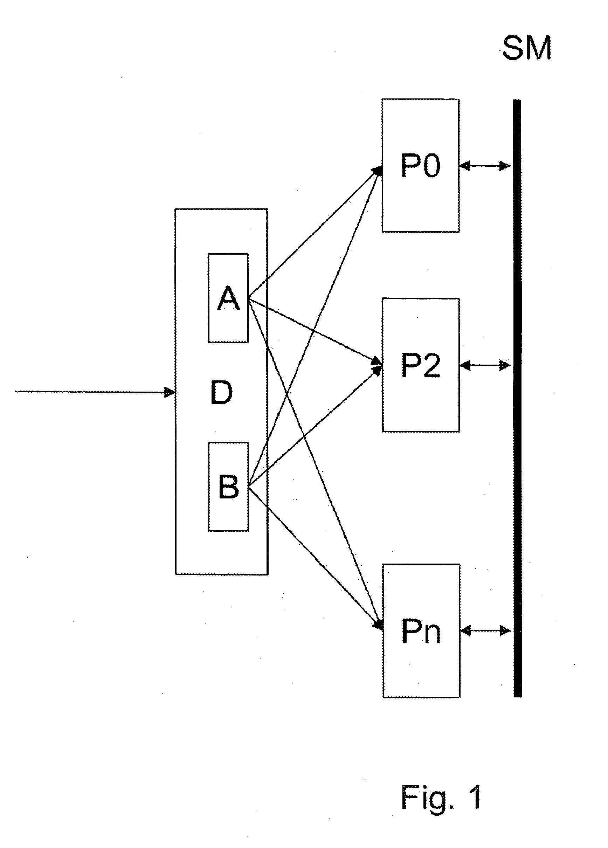

As shown in Fig. 1, a dispatching unit D receives all datagram packets sent to the virtual proxy's address. It will select one primary and one secondary proxy out of the available proxies P0 ... Pn, duplicate the datagram and forward one copy to each of them.

For the decision, which of the proxies will be used as the primary proxy, the dispatching unit usually extracts the values of particular data fields of the packet. These extracted values identify or are associated with a particular connection (denominated "unambiguous reference" hereafter). Each of the proxies maintains its context, i.e. the states of the associated connections. In case of a failover from a primary to a secondary proxy, the latter may look up the current state, e.g., via a bus or a shared memory SM. Alternatively the secondary proxy could also emulate the call processing and compute a shadow state without interaction.

For carrying out a dispatch, the unambiguous reference could be serialized and fed into a linear feedback shift register (LFSR), yielding an output of several bit representing the number Y which is used for selecting the appropriate proxy. Alternatively any kind of hashing function would also be applicable. For a definition of hashing function it is e.g. referred to http://en.wikipedia.org/wiki/Hash-table.

In order to limit the range usually the result is interpreted as a number in the modulo ring suitable to the number of servers, i.e. the ordinal number of the identified primary server equals Y mod N where Y is the output of the LFSR and where N is the number of the servers. Suitable coefficient sets for LFSRs are known to any person skilled in the art from, e.g., pseudo noise (PN) generators or data scramblers, see Golomb, Solomon W.: Shift register sequences, Aegean Park Press, Laguna Hills, 1982 [precise excerpt].

The dispatching unit itself could be parallelized, e.g. into sub units A and B.

It is more advantageous for extensibility and scalability, when virtual proxies are composed as an array of proxies with a dispatching unit.

The secondary proxy could be determined simply by feeding an additional 1-bit into the linear feedback shift register. This way, the secondary proxy will be chosen pseudo-randomly. Whenever the algorithm yields the same primary and secondary servers, the above step should be repeated, i.e. another 1-bit shall be fed into the linear feedback shift register. As the result is pseudo-random again, this step may in fact be repeated until a different address is selected.

Alternatively instead of simply feeding the bit into the shift register a secondary hashing function for determining the secondary server would solve also the problem. Thus a pair of hashing functions f and g, say, form the packet domain into the domain of servers, determine a pair of primary and secondary server, i.e. for a packet P, the primary server f(P) is determined and the secondary server g(P). The same iterative approach could by used in case of f(P)=g(P), e.g., by a similar procedure for collision handling.

This dispatching mechanism is entirely stateless, i.e., it depends only on the incoming packet, and may thus be employed simultaneously in several parallel dispatching units A or B, etc., as already indicated in Fig. 1.

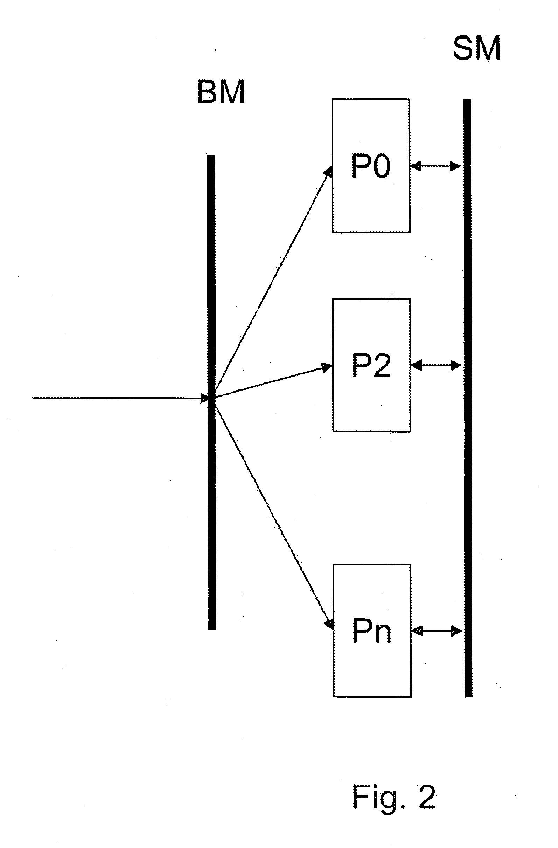

However, as this mechanism may be used at several locations simultaneously, it may also constitute the control mechanism for a switched network connecting the inbound lines and the proxies. In a simple setting without dispatching units, the proxies may pick up the datagram packets themselves from the broadcast medium BM connecting them, as shown in Fig. 2.

The mechanism proposed herein is not limited in its applicability to call state proxies, it may be used for many kinds of server clusters. The single servers may be addressed, e.g., by MAC or Internet protocol layer address. The protocols served by the virtual server may be UDP, TCP, etc.

Finally, by choosing appropriate timer values for the secondary entity's time, the virtual server may even be dispersed over a network, with the single entities connected over a wide area network.

There are three classes of deployment scenarios considered, each resulting in a special realization.

The first is the one-sided scenario, that is, e.g., an http server: As each transaction consists only of the connection between client and server, the client's Internet protocol address and optionally other header fields like the port number may be used as unambiguous reference. These fields may be extracted easily from the IP packets.

In the more complex double-sided coupled scenario, e.g. a SIP proxy handles a client server session relation: In such a scenario, a transaction consists of two or more data flows, one between server and caller, further ones between server and callee(s). Here, the SIP Call-ID, see RFC3261 - which is included in each SIP message - may be used as appropriate unambiguous reference.

In a double-sided detached scenario, e.g. a back-to-back user agent (B2BUA) constitutes a termination point of SIP calls, even a simple two-party call is divided into two separate SIP calls: One between the caller and the B2BUA and another one between the B2BUA and the called party. These separate calls have to carry different Call-IDs, but need to be served by the same proxy nevertheless. In order to make the approach applicable to the B2BUA scenario as well, one can take advantage of the fact that the Call-ID is chosen by the originating side. For guaranteeing global uniqueness, every SIP entity appends the fully qualified domain name to a self-generated value (separated by the @ symbol) which is unique with respect to this domain, e.g.: 12345@domain.com. In the case of a B2BUA it is therefore suggested to determine the Call-ID of outgoing calls in such a way that it yields the same primary, secondary, etc. proxies as the initiating call. This may be for instance achieved by taking advantage of the reciprocity of LFSRs, i.e. an input value (the unambiguous reference) generating a particular output value (which then yields the primary proxy through a modulo operation) may be easily determined. As the state machine is entirely described by the output value, feeding additional "1"-bits will always yield the same values and thus the identical sequence of secondary, supplementary secondary, etc., proxy. Abstractly this is done by the inverse hashing function, which exists since hashing functions are injective. In order to guarantee the uniqueness required, the proxy generating the Call-ID has to append an auxiliary string. Otherwise, e.g., in the case of conference call setups where multiple Call-IDs are needed (as a B2BUA is being employed), uniqueness would not be assured. Furthermore, in the case of a proxy failure, the different secondary proxies might otherwise generate identical Call-IDs on behalf of the primary proxy, which would lead to a Call-ID collision once the primary proxy resumes its duty. Alternatively to the determination of the second Call-ID the cross-product could be taken as domain for the hashing functions.

When applying shift registers, the auxiliary and the LFSR-generated part have to be easily separable, e.g., by infixing a unique string or by defining a fixed length for either of them. The unambiguous reference for B2BUA-originating calls is only a part of the Call-ID, whereas for incoming calls the entire Call-ID may be used.

One sole reply to a datagram packet is assured. As the dispatching mechanism is stateless, every proxy may easily implement its own entity. This enables it to decide whether it is the primary or the secondary proxy regarding a particular connection. This obsoletes the need for any additional signalling or tagging.

If a node determines that it acts as the primary node, it generates the respective reply and sends it to the intended recipient as well as towards the respective secondary proxy within the array. As the base address is known to each of the array's nodes, the primary server may even determine the secondary proxy's address by itself and send the datagram directly. This way, a meshed backplane connecting the proxies within the array may be employed, removing a potential bottleneck for the system's performance.

The proxy recognizing that it is the secondary one with respect to a particular inbound datagram will generate a reply by himself. However, it shall not send it out immediately; rather store it for a certain - short - time interval for the reply generated by the primary proxy. If it does not receive a datagram identical to the one generated in time, it may assume that the primary proxy has probably failed and should send out this datagram itself. It then increments a failure counter for that particular other proxy.

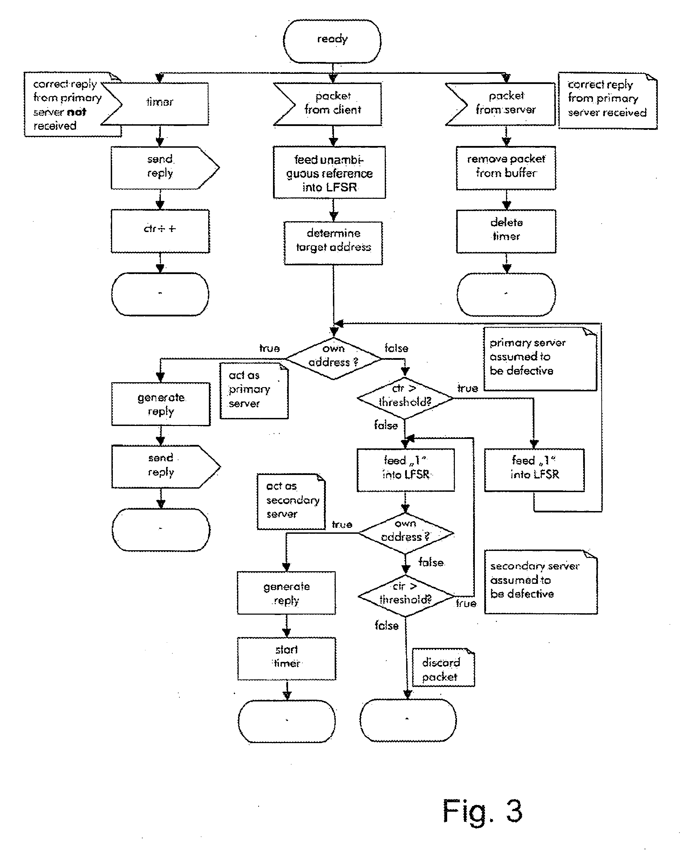

Fig. 3 shows a SDL flow diagram of the method according to the invention. Once the counter 'ctr' exceeds a certain threshold, the proxy assumes that the particular proxy has failed. The proxy notifies the dispatching unit(s) about the failure, which will then modify their distribution mechanism as follows: Whenever the failed proxy is supposed to be either the primary or the secondary proxy, another "1" is fed into the linear feedback shift register and the datagram then delivered to the resulting proxy address as well. As that third proxy will also have noticed that the primary proxy has failed, it will start acting as the supplementary secondary proxy. This is due to the fact that each proxy within the array may be primary proxy for some and secondary proxy for other connections. Hence, the proxies check each other mutually for proper operation. Due to the peculiarities of the distribution mechanism, the load of the failed proxy is spread stochastically across all proxies again.

After a certain time, all connections that have been in place before the first failure, will either have terminated or have sent a signalling message refreshing the respective call states in the proxies. When these refresh messages are distributed to the new secondary servers, they will create a new workable set of state information. This way, the system is being prepared piece by piece for surviving yet another failure of any single proxy within the array. In case of absence of such a notification, the secondary proxy (acting as supplementary primary proxy) may deliver the necessary state information to the supplementary secondary proxy.

In contrast, systems with a fixed assignment of primary and secondary proxies may be unable to recover from a failure of the primary proxy and subsequent failure of the respective secondary proxy.

When a node receives a datagram packet where it is the primary proxy, but does not have any state variables, it may deduce that it is rebooting after a crash. It may then start synchronizing the data from the secondary proxies. This may be done by silently listening to new connections and connection refresh messages. Once it is done with restoring and ready to resume regular operation, the primary proxy will notify the respective secondary and supplementary secondary proxies. For determining the correct timing windows in the case for SIP RFC4028 should be consulted.

It is noted in advance that this mechanism could be realized even in hardware for performance reasons and could be integrated tightly into servers of network entities that have to be dispatched.

## Claims

1. A dispatching method for allocating a serving entity out of a set of proxies or servers (P1 ... Pn) of a telecommunication system, wherein the serving entity determines itself as allocated dependent from a broadcasted message by means of an hashing function
**characterized in that**
a secondary serving entity is determined by the allocated serving entity or determines itself and ensures to be not the allocated serving entity, wherein a proxy or server can decide whether it is primary or secondary proxy or server regarding to a particular connection, and if a node determines that it acts as the primary node, it generates the respective reply and sends it to an intended recipient as well as towards the respective secondary proxy or server for wherein a proxy or server recognizing that it is the secondary one with respect to a particular inbound datagram will generate a reply by himself after a short time interval if it does not receive a datagram.

2. The dispatching method according claim 1, **characterized in that** the secondary serving entity is determined by the image of the hashing function , and if the same server is identified the determination is iterated by means of a collision resolution technique.

3. The method according to claim 1, **characterized in that** the message is delivered by means of a datagram.

4. A telecommunication system comprising distribution means (BM) for distributing messages and servers or proxies for processing messages, where the telecommunication system comprises dispatching means for allocating a message to a server or a proxy, **characterized in that** the server or the proxy comprising the dispatching means and the dispatching means are adapted to determine dependent from the message whether this server or proxy becomes an allocated server or proxy and wherein the server or proxy comprises dispatching means for determining a secondary server or proxy, wherein a server or proxy can decide whether it is primary or secondary proxy or server regarding to a particular connection, and if a node determines that it acts as the primary node, it generates the respective reply and sends it to an intended recipient as well as towards the respective secondary proxy or server or wherein a proxy or server recognizing that it is the secondary one with respect to a particular inbound datagram will generate a reply by himself after a short time interval if it does not receive a datagram.

5. A server of a telecommunication system, **characterized by** comprising dispatching means for allocating a message to the server, where the dispatching means are adapted to determining dependent from the message whether the server becomes an allocated server, the server further comprising identification means for determining a secondary server, wherein the server can decide whether it is primary or secondary server regarding to a particular connection, and if a node determines that it acts as the primary node, it generates the respective reply and sends it to an intended recipient as well as towards the respective secondary server or wherein the server recognizing that it is the secondary one with respect to a particular inbound datagram will generate a reply by himself after a short time interval if it does not receive a datagram..

6. A proxy of a telecommunication system, **characterized by** comprising dispatching means for allocating a message to the proxy, where the dispatching means are adapted to determining dependent from the message whether the proxy becomes an allocated proxy, the proxy further comprising identification means for determining a secondary proxy, wherein the proxy can decide whether it is primary or secondary proxy regarding to a particular connection, and if a node determines that it acts as the primary node, it generates the respective reply and sends it to an intended recipient as well as towards the respective secondary proxy or wherein the proxy recognizing that it is the secondary one with respect to a particular inbound datagram will generate a reply by himself after a short time interval if it does not receive a datagram.

7. A computer software product **characterized by** comprising program means for performing the method according to claim 1.

## Patentansprüche

1. Dispositionsverfahren zum Zuordnen einer bedienenden Entität aus einem Satz von Proxys oder Servern (P1...Pn) eines Telekommunikationssystems, wobei sich die bedienende Einheit in Abhängigkeit von einer gebroadcasteten Nachricht selbst anhand einer Hash-Funktion als zugeordnet bestimmt,
**dadurch gekennzeichnet, dass**
eine sekundäre bedienende Entität von der zugeordneten bedienenden Einheit bestimmt wird oder sich selbst bestimmt und gewährleistet, dass sie nicht die zugeordnete bedienende Entität ist, wobei ein Proxy oder Server entscheiden kann, ob er für eine bestimmte Verbindung ein primärer oder ein sekundärer Proxy oder Server ist, und, wenn ein Knoten bestimmt, dass er als der primäre Knoten fungiert, er die entsprechende Antwort erzeugt und diese an einen vorgesehenen Empfänger sowie an den entsprechenden sekundären Proxy oder Server sendet, oder wobei ein Proxy oder Server, welcher erkennt, dass er der sekundäre Proxy oder Server in Bezug auf ein bestimmtes eingehendes Datagramm ist, nach einem kurzen Zeitintervall selbst eine Antwort erzeugt, wenn er kein Datagramm empfängt.

2. Das Dispositionsverfahren nach Anspruch 1, **dadurch gekennzeichnet, dass** die sekundäre bedienende Entität durch die Abbildung der Hash-Funktion bestimmt wird, und wenn derselbe Server identifiziert wird, die Bestimmung anhand einer Kollisionsauflösungstechnik wiederholt wird

3. Das Dispositionsverfahren nach Anspruch 1, **dadurch gekennzeichnet, dass** die Nachricht anhand eines Datagramms zugestellt wird.

4. Ein Telekommunikationssystem mit Verteilermitteln (BM) zum Verteilen von Nachrichten, und Servern oder Proxys zum Verarbeiten von Nachrichten, wobei das Telekommunikationssystem Dispositionsmittel zum Zuordnen einer Nachricht zu einem Server oder Proxy umfasst, **dadurch gekennzeichnet, dass** der Server oder der Proxy die Dispositionsmittel umfasst und die Dispositionsmittel dazu ausgelegt sind, abhängend von der Nachricht zu bestimmen, ob dieser Server oder Proxy zu einem zugeordneten Server oder Proxy wird, und wobei der Server oder Proxy Dispositionsmittel zum Bestimmen eines sekundären Servers oder Proxys umfasst, wobei der Server oder Proxy entscheiden kann, ob er in Bezug auf eine bestimmte Verbindung ein primärer oder ein sekundärer Proxy oder Server ist, und, wenn ein Knoten bestimmt, dass er als der primäre Knoten fungiert, dieser die entsprechende Antwort erzeugt und an einen vorgesehenen Empfänger sowie an den entsprechenden sekundären Proxy oder Server sendet, oder wobei ein Proxy oder Server, welcher erkennt, dass er in Bezug auf ein bestimmtes eingehendes Datagramm der sekundäre Proxy oder Server ist, nach einem kurzen Zeitintervall selbst eine Antwort erzeugt, wenn er kein Datagramm empfängt.

5. Server eines Telekommunikationssystems, **dadurch gekennzeichnet, dass** er Dispositionsmittel zum Zuordnen einer Nachricht zu dem Server umfasst, wobei die Dispositionsmittel dazu ausgelegt sind, abhängend von der Nachricht zu bestimmen, ob der Server zu einem zugeordneten Server wird, und wobei der Server weiterhin Identifikationsmittel zum Bestimmen eines sekundären Servers umfasst, wobei der Server entscheiden kann, ob er in Bezug auf eine bestimmte Verbindung ein primärer oder ein sekundärer Server ist, und, wenn ein Knoten bestimmt, dass er als der primäre Knoten fungiert, dieser die entsprechende Antwort erzeugt und an einen vorgesehenen Empfänger sowie an den entsprechenden sekundären Server sendet, oder wobei der Server, welcher erkennt, dass er in Bezug auf ein bestimmtes eingehendes Datagramm der sekundäre Server ist, nach einem kurzen Zeitintervall selbst eine Antwort erzeugt, wenn er kein Datagramm empfängt.

6. Proxy eines Telekommunikationssystems, **dadurch gekennzeichnet, dass** er Dispositionsmittel zum Zuordnen einer Nachricht zu dem Proxy umfasst, wobei die Dispositionsmittel dazu ausgelegt sind, abhängend von der Nachricht zu bestimmen, ob der Proxy zu einem zugeordneten Proxy wird, und wobei der Proxy weiterhin Identifikationsmittel zum Bestimmen eines sekundären Proxys umfasst, wobei der Proxy entscheiden kann, ob er in Bezug auf eine bestimmte Verbindung ein primärer oder ein sekundärer Proxy ist, und, wenn ein Knoten bestimmt, dass er als der primäre Knoten fungiert, dieser die entsprechende Antwort erzeugt und an einen vorgesehenen Empfänger sowie an den entsprechenden sekundären Proxy sendet, oder wobei der Proxy, welcher erkennt, dass er in Bezug auf ein bestimmtes eingehendes Datagramm der sekundäre Proxy ist, nach einem kurzen Zeitintervall selbst eine Antwort erzeugt, wenn er kein Datagramm empfängt.

7. Computer-Software-Produkt, **dadurch gekennzeichnet, dass** es Programmmittel zum Ausführen des Verfahrens gemäß Anspruch 1 umfasst.

## Revendications

1. Procédé de distribution pour attribuer une entité servante parmi un ensemble de proxys ou de serveurs (P1...Pn) d'un système de télécommunication, dans lequel l'entité servante détermine elle-même qu'elle est attribuée en fonction d'un message de diffusion au moyen d'une fonction de hachage
**caractérisé en ce que**
une entité secondaire est déterminée par l'entité servante attribuée ou se détermine elle-même et s'assure de ne pas être l'entité servante attribuée, procédé dans lequel un proxy ou un serveur peut décider s'il est le proxy ou serveur primaire ou secondaire pour une connexion particulière et, si un noeud détermine qu'il agit en tant que noeud primaire, il génère la réponse correspondante et l'envoie à un destinataire prévu tout en la transférant au proxy ou serveur secondaire correspondant, ou procédé dans lequel un proxy ou un serveur qui reconnaît qu'il est le secondaire pour un datagramme entrant particulier générera de lui-même une réponse après un court intervalle de temps s'il ne reçoit pas de datagramme.

2. Procédé de distribution selon la revendication 1, **caractérisé en ce que** l'entité servante secondaire est déterminée par l'image de la fonction de hachage et si le même serveur est identifié, il y a itération de la détermination au moyen d'une technique de résolution de collision.

3. Procédé selon la revendication 1, **caractérisé en ce que** le message est délivré au moyen d'un datagramme.

4. Système de télécommunication comprenant des moyens de distribution (BM) pour distribuer des messages et des serveurs ou proxys pour traiter les messages, le système de télécommunication comprenant des moyens de distribution pour attribuer un message à un serveur ou un proxy, **caractérisé en ce que** le serveur ou proxy comprend des moyens de distribution et les moyens de distribution sont adaptés pour déterminer, en fonction du message, si ce serveur ou proxy devient un serveur ou proxy attribué et le serveur ou proxy comprenant des moyens de distribution pour déterminer un serveur ou proxy secondaire, un serveur ou proxy pouvant décider s'il est un proxy ou un serveur primaire ou secondaire pour une connexion particulière et, si un noeud détermine qu'il agit en tant que noeud primaire, il génère la réponse correspondante et l'envoie à un destinataire prévu tout en la transférant au proxy ou serveur secondaire correspondant, ou alors un proxy ou un serveur qui reconnaît qu'il est le secondaire pour un datagramme entrant particulier générant ensuite de lui-même une réponse après un court intervalle de temps s'il ne reçoit pas de datagramme.

5. Serveur d'un système de télécommunication, **caractérisé en ce qu'**il comprend des moyens de distribution pour attribuer un message au serveur, les moyens de distribution étant adaptés pour déterminer, en fonction du message, si le serveur devient un serveur attribué, le serveur comprenant en outre des moyens d'identification pour déterminer un serveur secondaire, le serveur pouvant décider s'il est un serveur primaire ou secondaire pour une connexion particulière et, si un noeud détermine qu'il agit en tant que noeud primaire, il génère la réponse correspondante et l'envoie à un destinataire prévu tout en la transférant au serveur secondaire correspondant, ou alors le serveur qui reconnaît qu'il est le secondaire pour un datagramme entrant particulier générant ensuite de lui-même une réponse après un court intervalle de temps s'il ne reçoit pas de datagramme.

6. Proxy d'un système de télécommunication, **caractérisé en ce qu'**il comprend des moyens de distribution pour attribuer un message au proxy, les moyens de distribution étant adaptés pour déterminer, en fonction du message, si le proxy devient un proxy attribué, le proxy comprenant en outre des moyens d'identification pour déterminer un proxy secondaire, le proxy pouvant décider s'il est un proxy primaire ou secondaire pour une connexion particulière et, si un noeud détermine qu'il agit en tant que noeud primaire, il génère la réponse correspondante et l'envoie à un destinataire prévu tout en la transférant au proxy secondaire correspondant, ou alors le proxy qui reconnaît qu'il est le secondaire pour un datagramme entrant particulier générant ensuite de lui-même une réponse après un court intervalle de temps s'il ne reçoit pas de datagramme.

7. Produit logiciel informatique, **caractérisé en ce qu'**il comprend des moyens de programmation pour exécuter le procédé selon la revendication 1.
